# EUROPEAN PATENT APPLICATION

(11) **EP 4 488 921 A1**
(43) Date of publication of application: **08.01.2025**
(21) Application number: 23763172.6
(22) Date of filing: 03.02.2023
(51) Int. Cl.: G06Q 50/10, G06Q 30/0601

(54) **INFORMATION PROCESSING DEVICE, INFORMATION PROCESSING METHOD, AND INFORMATION PROCESSING PROGRAM**

(30) Priority: 04.03.2022 JP 2022033559
(71) Applicant: ZOZO, Inc., Chiba-shi, Chiba, 263-0023 (JP)
(72) Inventor: INUI, Utahiro, Chiba-shi, Chiba 263-0023 (JP); IETA, Tsuyoshi, Chiba-shi, Chiba 263-0023 (JP); ANDO, Fuminori, Chiba-shi, Chiba 263-0023 (JP); YOSHIOKA, Shunya, Chiba-shi, Chiba 263-0023 (JP); HORI, Miyuki, Chiba-shi, Chiba 263-0023 (JP)
(74) Representative: Hoffmann Eitle
(86) International application number: PCT/JP2023/003589
(87) International publication number: WO 2023/166910

(57) **Abstract**

To promote further improvement in usability for a user who refers to makeup of a different person. An information processing apparatus (100) includes a generation unit (132), an application unit (133), and a providing unit (134). The generation unit (132) generates makeup information for generating a face image in which same makeup as predetermined makeup is applied to a face image based on a face image of a poster with the predetermined makeup. The application unit (133) applies, to a face image of a user, makeup information that is generated from a face image that is selected by the user from among face images that are posted by posters who meet a predetermined condition. The providing unit (134) provides, to the user, a content that indicates the face image to which the makeup information is applied by the application unit (133) and a description content of a product that is used for the makeup.

## Description

### Field

The present invention relates to an information processing apparatus, an information processing method, and an information processing program.

### Background

It is often the case that, at the time of consideration of a purchase of a cosmetic product (cosmetics), it is difficult to get an image of oneself with the same makeup as makeup that is applied to a face of a different person, such as a model, and it is difficult to determine whether or not the makeup suits oneself.

Conventionally, a technology for supporting makeup with reference to makeup of a different person is known as a technology that meets a demand to check whether or not the makeup that is applied to a face of the different person suits oneself. For example, a technology for presenting makeup information on a different person in association with a region of a face part of a user is known.

### Citation List

### Patent Literature

Japanese Patent No. 5991536

### Non Patent Literature

W. Jiang, S. Liu, C. Gao, J. Cao, R. He, J. Feng, S. Yan "PSGAN: Pose and Expression Robust Spatial-Aware CAN for Customizable Makeup Transfer", [online], [searched on January 24, 2022], Internet <https://openaccess.thecvf.com/content_CVPR_2020/html/Jiang _PSGAN_Pose_and_Expression_Robust_Spatial-Aware_GAN_for_Customizable_Makeup_CVPR_2020_paper.html>

### Summary

### Technical Problem

However, in the conventional technology, for example, it is difficult to allow for checking, by a try-on function, on whether or not a product that a different person has used for makeup suits oneself and subsequently send a customer to a sales site that sells the product, and it is difficult to promote stimulation of support for customer sending by a makeup poster by using incentive fees. Therefore, there is room for further improvement in usability for a user who refers to makeup of a different person.

The present invention has been conceived in view of the foregoing situations, and an object of the present invention is to promote further improvement in usability for a user who refers to makeup of a different person.

### Solution to Problem

An information processing apparatus according to the present disclosure includes: a generation unit that generates makeup information for generating a face image in which same makeup as predetermined makeup is applied to a face image based on a face image of a poster with the predetermined makeup; an application unit that applies, to a face image of a user, makeup information that is generated from a face image that is selected by the user from among face images that are posted by posters who meet a predetermined condition; and providing unit that provides, to the user, a content that indicates the face image to which the makeup information is applied by the application unit and a description content of a product that is used for the makeup.

### Advantageous Effects of Invention

According to one aspect of the embodiments, it is possible to promote further improvement in usability for a user who refers to makeup of a different person.

### Brief Description of Drawings

FIG. 1 is a diagram illustrating a configuration example of an information processing system according to one embodiment.
FIG. 2 is a diagram illustrating an example of information processing according to one embodiment.
FIG. 3 is an explanatory diagram for explaining information processing for increasing a priority of a face image according to one embodiment.
FIG. 4 is a diagram illustrating a configuration example of a user terminal according to one embodiment.
FIG. 5 is a diagram illustrating a configuration example of a poster terminal according to one embodiment.
FIG. 6 is a diagram illustrating a configuration example of an information processing apparatus according to one embodiment.
FIG. 7 is a diagram illustrating an example of a poster information storage unit according to one embodiment.
FIG. 8 is a diagram illustrating an example of a cosmetic information storage unit according to one embodiment.
FIG. 9 is a flowchart illustrating an example of information processing according to one embodiment.
FIG. 10 is a hardware configuration diagram illustrating an example of functions of the information processing apparatus.

### Description of Embodiments

Modes (hereinafter, referred to as "embodiments") for carrying out an information processing apparatus, an information processing method, and an information processing program according to the present application will be described in detail below with reference to the drawings. The information processing apparatus, the information processing method, and the information processing program according to the present application are not limited by the embodiments below. In addition, in each of the embodiments below, the same components are denoted by the same reference symbols, and repeated explanation will be omitted.

### Embodiment

### 1. Configuration of information processing system

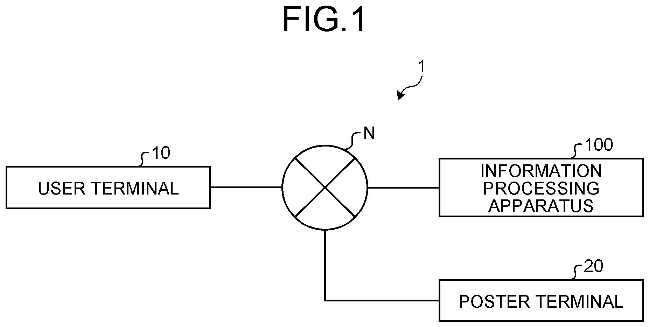

An information processing system 1 illustrated in FIG. 1 will be described below. As illustrated in FIG. 1, the information processing system 1 includes a user terminal 10, a poster terminal 20, and an information processing apparatus 100. The user terminal 10, the poster terminal 20, and the information processing apparatus 100 are communicably connected to each other in a wired or wireless manner via a predetermined communication network (network N). FIG. 1 is a diagram illustrating a configuration example of the information processing system 1 according to one embodiment.

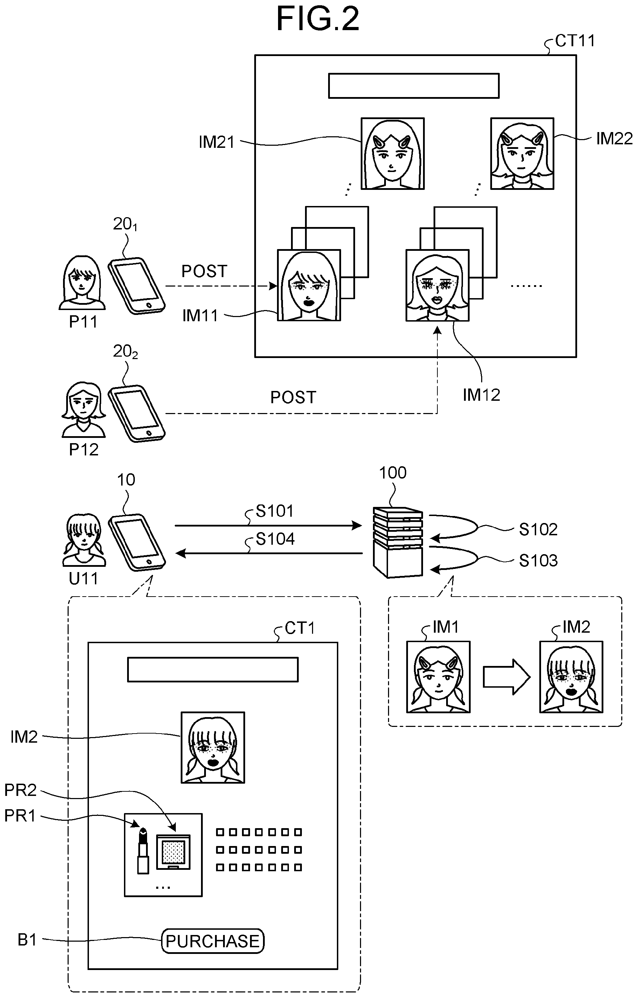

The user terminal 10 is an information processing apparatus that is used by a user who wants to check whether or not makeup that is applied to a face of a different person suits the user. Further, the user who uses the user terminal 10 considers, for example, a purchase of a cosmetic product. The user terminal 10 may be any device as long as it is possible to perform processes according to one embodiment. Further, the user terminal 10 may be a certain device, such as a smartphone, a tablet terminal, a notebook personal computer (PC), a desktop PC, a mobile phone, or a personal digital assistant (PDA). FIG. 2 illustrates a case in which the user terminal 10 is a smartphone.

The user terminal 10 is, for example, a smart device, such as a smartphone or a tablet, and is a mobile terminal device that is able to communicate with an arbitrary server apparatus via a wireless communication network, such as 3G to 5G (Generations) or LTE (Long Term Evolution). Further, the user terminal 1 may include a screen, such as a liquid crystal display, that has a function of a touch panel, and may receive various kinds of operation, such as tap operation, slide operation, or scroll operation, on displayed data, such as a content, by using a finger, a stylus, or the like from the user. In FIG. 2, the user terminal 10 is used by a user U11.

The poster terminal 20 is an information processing apparatus that is used by a poster who provides an image of a face with makeup. Further, the poster who uses the poster terminal 20 posts, for example, a face image with completed makeup by applying the makeup to an unpainted face without makeup. The poster terminal 20 may be any device as long as it is possible to perform processes according to one embodiment. Furthermore, the poster terminal 20 may be a certain device, such as a smartphone, a tablet terminal, a notebook PC, a desktop PC, a mobile phone, or a PDA. FIG. 2 illustrates a case in which the poster terminal 20 is a smartphone.

The poster terminal 20 is, for example, a smart device, such as a smartphone or a tablet, and is a mobile terminal device that is able to communicate with an arbitrary server apparatus via a wireless communication network, such as 3G to 5G or LTE. Further, the poster terminal 20 may include a screen, such as a liquid crystal display, that has a function of a touch panel, and may receive various kinds of operation, such as tap operation, slide operation, or scroll operation, on displayed data, such as a content, by using a finger, a stylus, or the like from the user. In FIG. 2, the poster terminals 20 are used by a poster P11 and a poster P12. Meanwhile, a poster terminal 20₁ and a poster terminal 20₂ are the poster terminals 20 that are used by the poster P11 and the poster P12, respectively.

The information processing apparatus 100 is an information processing apparatus that is aimed at promoting further improvement in usability for the user who refers to makeup of a different person, and may be any apparatus as long as it is possible to perform processes according to one embodiment. The information processing apparatus 100 may be implemented by a server apparatus, a cloud system, or the like. For example, the information processing apparatus 100 may be implemented by a server apparatus, a cloud system, or the like that provides a predetermined electronic mall that sells cosmetic products.

### 2. Example of information processing

FIG. 2 is a diagram illustrating an example of information processing that is performed by the information processing system 1 according to one embodiment. In the embodiment below, as one example, a process will be described that is performed to respond to a request from the user U11 who wants to check whether or not makeup on the poster P11 suits the user U11.

The information processing apparatus 100 acquires, for example, information that is selected by the user U11 from among face images that are posted by posters, such as celebrities, as what is called influencers who have followers exceeding a predetermined threshold on a Social Networking Service (SNS) (Step S101). Meanwhile, the face images that are selectable by the user U11 may include a plurality of face images that are posted by a single poster. In FIG. 2, it is assumed that a face image IM11 that is posted by the poster P11, a face image IM12 that is posted by the poster P12, and the like are included. In the following, explanation will be given based on the assumption that the user U11 selects the face image IM11 from a content CT11. Meanwhile, the face images that are displayed in the content CT11 may be selected based on any criterion. For example, it may be possible to preferentially select face images that are posted by a poster that is followed by the user U11. Furthermore, the content CT11 is a content of a predetermined service for managing a face image of a poster.

The face image IM11 is a face image of the poster P11 to which predetermined makeup is applied. Meanwhile, a face image IM21 is a face image of the poster P11 before the makeup is applied, with respect to the makeup in the face image IM11. The face image IM21 may be displayed in the content CT11 together with the face image IM11, or may be displayed by operation (for example, clock or tap) or the like on the face image IM11. Furthermore, the face image IM21 need not be displayed for the user. With this configuration, the poster need not provide an unpainted face to the user, so that it is possible to promote improvement in usability for the poster. Moreover, the face image IM12 is a face image of the poster P12 to which predetermined makeup is applied. Meanwhile, the face image IM22 is a face image of the poster P12 before the makeup is applied, with respect to the makeup in the face image IM12. The face image IM22 may be displayed in the content CT11 together with the face image IM12, or may be displayed by operation or the like on the face image IM12. Furthermore, the face image IM22 need not be displayed for the user.

Here, as one example of a method of generating makeup information, a method called Pose and Expression Robust Spatial-Aware Generative Adversarial Network (PSGAN) disclosed in Non Patent Literature 1 is known, in which only makeup information is transferred from a face image to a different face, for example. The method is a method using deep learning, and it is possible to transfer only the makeup information to a different face independently of a facial expression or a pose. The information processing apparatus 100, with use of a certain method, such as PSGAN, generates makeup information for generating a face image in which the same makeup as the makeup that the poster P11 has applied to the face image IM11 that is selected by the user U11 is applied (Step S102). Further, the information processing apparatus 100, with use of a certain method, such as PSGAN, applies the makeup information that is generated at Step S102 to the face image IM1 of the user U11 (Step S103). In this case, the face image IM1 may be acquired by any method. For example, the face image IM1 may be registered in advance by the user U11 and stored in an external information processing apparatus or the subject apparatus, or may be transmitted from the user terminal 10. Furthermore, the face image IM1 may be selected as an application target by the user U11, or may automatically be selected as the application target. Moreover, the face image IM2 is a face image that is obtained by application to the face image IM1.

The information processing apparatus 100 transmits, to the user terminal 10, information for displaying a content that includes the face image IM2 of the user U11 to which the makeup information is applied at Step S103 and a description content of a cosmetic product (corresponding to a product) that is used for the makeup (Step S104). Further, the user terminal 10 displays the content CT1 based on the information that is transmitted from the information processing apparatus 100.

Here, the content CT1 includes the description content of the cosmetic product that the poster P11 has used for the makeup in the face image IM11. For example, information, such as a product name or a price, on a cosmetic product is included. FIG. 2 illustrates a case in which two cosmetic products (PR1 and PR2), such as a lipstick and a foundation, are included, but the number of the cosmetic products is not specifically limited. For example, the content CT1 may include description contents of a set of cosmetic products that the poster P11 has used to achieve a state in which predetermined makeup is applied as in the face image IM11 from a state in which the makeup is not applied as in the face image IM21. Further, the description content may include operation reception information B1 for receiving operation for accessing to a predetermined electronic mall in which the set of cosmetic products used for the makeup are available for purchase. When operation is received, the operation reception information B1 may allow access to, for example, a product page in which the set of cosmetic products is introduced or allow access to a purchase page in which the set of cosmetic products are added to a cart. Meanwhile, the operation reception information B1 may be integrated with the face image IM2 or a different content in the description content, and may allow access to the product page or the purchase page when operation on the face image IM2 or the different content in the description content is received.

The information processing apparatus 100 determines whether or not the user U11 has purchased the cosmetic product that is associated with the description content. For example, the information processing apparatus 100 determines whether or not the user U11 has purchased the set of cosmetic products including the cosmetic product PR1 and the cosmetic product PR2 or a part of the cosmetic products in the predetermined electronic mall that the user U11 has accessed by operating the operation reception information B1. When determining that the user U11 has purchased the cosmetic product, the information processing apparatus 100 determines that a reward corresponding to the purchase made by the user U11 is given to the poster P11 who is the poster who has posted the face image using the makeup that corresponds to the makeup information on the image IM2. Further, the information processing apparatus 100 performs a process of giving the reward corresponding to the purchase made by the user U11 to the poster P11. Meanwhile, the information processing apparatus 100 may determine that information that allows the poster P11 to receive the reward corresponding to the purchase made by the user U11 is to be transmitted. In this case, the information processing apparatus 100 transmits the information that allows the poster P11 to receive the reward corresponding to the purchase made by the user U11. Further, the information processing apparatus 100 may determine that the reward is transferred to an account of the poster P11. In this case, the information processing apparatus 100 performs a process for transferring the reward to the account of the poster P11.

### First variation of process: display using face image without makeup

In the embodiment as described above, the case has been described in which the face images with predetermined makeup, such as the face image IM11 and the face image IM12, are displayed in the content CT11, but embodiments are not limited to this example. For example, it may be possible to display, in the content CT11, the face images without makeup, such as the face image IM21 and the face image IM22, and may display face images with makeup in accordance with operation on the face images without makeup. Further, the information processing apparatus 100 may generate makeup information to be applied to the face image of the user if the user U11 selects a face image by viewing the face images with makeup corresponding to the face images without makeup.

### Second variation of process: display of makeup video

In the embodiment as described above, the case has been described in which, in the content CT11, the face images with the predetermined makeup, such as the face image IM11 and the face image IM12, are displayed, and the face images without makeup are displayed by, for example, operating the face images with the makeup, but embodiments are not limited to this example. For example, it may be possible to display a makeup video with makeup that the poster has made to achieve a state with the makeup from a state without the makeup by operating the face image with the makeup. Meanwhile, the makeup video includes, for example, the face images without makeup, such as the face image IM21 and the face image IM22, and the face images with the predetermined makeup, such as the face image IM11 and the face image IM12. Further, the makeup video may be displayed in the content CT11 together with the face images with the makeup.

### Third variation of process: limitation on face image without makeup

In the embodiment as described above, the case has been described in which the face images without makeup, such as the face image IM21 and the face image IM22, are face images of an unpainted face of a poster, but embodiments are not limited to this example. For example, the face images without makeup, such as the face image IM21 and the face image IM22, may be face images with light makeup, such as only with a lipstick or a foundation, as long as the face images are face images without predetermined makeup, such as the face image IM11 and the face image IM12. In this case, the information processing apparatus 100 may generate makeup information such that the makeup information on the cosmetic product that is used for the face images without makeup, such as the face image IM21 and the face image IM22, is not applied to the face image of the user, or may generate makeup information such that makeup information on the cosmetic product that is used for the face images without makeup, such as the face image IM21 and the face image IM22, is applied to the face image of the user. Meanwhile, the face images without makeup, such as the face image IM21 and the face image IM22, are used for learning a skeleton for generating the makeup information, and therefore, it is possible to generate appropriate makeup information even with a face image other than the face image of an unpainted face. Therefore, it is sufficient to register the face image of the poster without makeup once on a predetermined service that manages the face image of the poster, for example. Furthermore, the description content of the cosmetic product that is used in the face images without makeup, such as the face image IM21 and the face image IM22, may be included in the content CT1, but need not always be included in the content CT1.

### Fourth variation of process: automatic extraction of product information

In the embodiment as described above, the cosmetic product that the poster P11 has used for the makeup with respect to the face image IM11 may be identified, in advance, from the face image IM11 or the face image IM21 by image analysis, and may be stored in an external information processing apparatus or the subject apparatus in association with the face image IM11 or the face image IM21. Furthermore, for example, the cosmetic product may be identified based on a purchase history of cosmetic products of the poster P11 in a predetermined electronic mall and stored in association with the face image IM11 or the face image IM21, or the cosmetic product may be identified by selection that is made by the poster P11 from a list that is displayed as candidates based on the purchase history of cosmetic products and stored in association with the face image IM11 or the face image IM21. Moreover, for example, the cosmetic product may be identified by reception of registration of a cosmetic product that is not sold in a predetermined electronic mall from the poster P11 and stored in association with the face image IM11 or the face image IM21.

### Fifth variation of process: reflection of order of makeup application

In the embodiment as described above, the information processing apparatus 100 may identify an order of makeup application that is performed by the poster P11 with respect to the face image IM11, and generate makeup information in which the order of makeup application is reflected. In this case, the information processing apparatus 100 may identify the order of makeup application by receiving, for example, input of the order of makeup application from the poster P11, or may identify the order of makeup application from a makeup video if the makeup video with respect to the face image IM11 is present. Furthermore, the information processing apparatus 100 may identify the order of makeup application by, for example, performing learning from a plurality of makeup videos. Moreover, in the case of the makeup video, the information processing apparatus 100 is able to generate makeup information for each category of a cosmetic product, and therefore may select an applicable face image. Furthermore, the content CT1 may include a description content in which the order of makeup application is reflected. With this configuration, the information processing apparatus 100 is able to make an appropriate proposal including the order of makeup application.

### Sixth variation of process: priority display 1 of face image

In the embodiment as described above, the face images that are displayed in the content CT1 may be selected based on any criterion, and may be displayed in any order. For example, it may be possible to preferentially select a face image that is posted by a poster that is followed by the user U11, or it may be possible to preferentially display a face image of a poster with a larger number of followers. Furthermore, for example, it may be possible to preferentially select or display a face image based on the face information or different body information on the user U11.

Here, examples of the face information include a shape, a size, and arrangement of a part of the face, a color and a contour (shape) of the face, and a color and a size of a pupil. Furthermore, examples of the color of the face include a face color of an unpainted face. For example, an average color of an entire measured portion except for lips, an average color of a forehead area, an average color of an area below the left eye, an average color of an area below the right eye, an average color of a left cheek area, an average value of a right cheek, an average color of a nose area, an average color of an upper lip, and an average color of a lower lip, an average color of a jaw area, and the like are included. Moreover, examples of the different body information other than the face information include hair (a hair style, a hair type, a hair color, hair ornaments, and the like), a skin (a skin color, a skin type, wrinkles, and the like), and a body shape (a size of a part and entire balance).

In the embodiment as described above, it may be possible to increase the priority such that a face image of a poster is preferentially selected or displayed with an increase in the similarity between the user U11 and the body information. For example, it may be possible to increase the priority of the face image of the poster whose face or information on a body other than the face is the same as or more similar to that of the user U11. Furthermore, for example, it may be possible to increase the priority of the face image of the poster whose age, skin age, or skin problem is the same as or more similar to that of the user U11. Moreover, for example, it may be possible to increase the priority of the face image of the poster whose makeup problem is the same as or more similar to the user U11. Furthermore, for example, it may be possible to increase the priority of the face image of the poster whose hair style, hair color, or hair preference is the same as or more similar to that of the user U11. Moreover, it may be possible to reduce the priority of the face image of the poster such that a face image of a poster is not preferentially selected or displayed with a decrease in the similarity between the user U11 and the body information. For example, it may be possible to decrease the priority of the face image of the poster whose balance of parts of the face is more different from that of the user U11. Furthermore, for example, it may be possible to decrease the priority of the face image of the poster whose contour of the face is more different from that of the user U11. Moreover, for example, it may be possible to decrease the priority of the face image of the poster whose face color of an unpainted face is more different from that of the user U11.

Furthermore, it may be possible to preferentially select or display a face image based on an index that indicates the popularity of the face image, such as access histories, purchase histories, or evaluation histories of a plurality of users with respect to the face image. Specifically, it may be possible to preferentially select or display a face image based on access histories of face images selected by a plurality of users, purchase histories of a plurality of users due to customer sending via contents that are provided by selection of face images, evaluation histories of a plurality of users at the time of application of makeup due to selection of face images, or evaluation histories of face images or purchased cosmetic products of the plurality of users after purchases. For example, it may be possible to increase the priority of the face image with an increase in the index that indicates the popularity of the face image, such as the access histories, the purchase histories, or the evaluation histories of the plurality of users with respect to the face image. Furthermore, it may be possible to preferentially select or display a face image based on a total price of a set of cosmetic products that the poster has used for the makeup. For example, it may be possible to increase or decrease the priority of the face image with an increase in the total price of the set of cosmetic products that the poster has used for the makeup.

### Seventh variation of process: preferential display 2 of face image

In the embodiment as described above, it may be possible to preferentially select or display a face image based on the purchase history of cosmetic products of the user U11. For example, it may be possible to increase the priority of the face image of the poster for whom the owned cosmetic products are the same as or more similar to those of the user U11. For example, the purchase history of the user U11 includes the cosmetic product PR1, the cosmetic product PR2, and a cosmetic product PR3, it may be possible to increase the priority of the face image of the poster whose purchase history includes a larger number of cosmetic products from among the cosmetic product PR1, the cosmetic product PR2, and the cosmetic product PR3. For example, it may be possible to increase the priority of the face image of the poster whose purchase history includes the cosmetic product PR2 and the cosmetic product PR3 as compared to the priority of the face image of the poster whose purchase history includes only the cosmetic product PR1 among the cosmetic product PR1, the cosmetic product PR2, and the cosmetic product PR3. Furthermore, for example, it may be possible to increase the priority of the face image as the face image is the same as or more similar to the cosmetic product owned by the user U11. For example, when the purchase history of the user U11 includes the cosmetic product PR1, the cosmetic product PR2, and the cosmetic product PR3, it may be possible to increase the priority of the face image with makeup in which a large number of cosmetic products among the cosmetic product PR1, the cosmetic product PR2, and the cosmetic product PR3 are used.

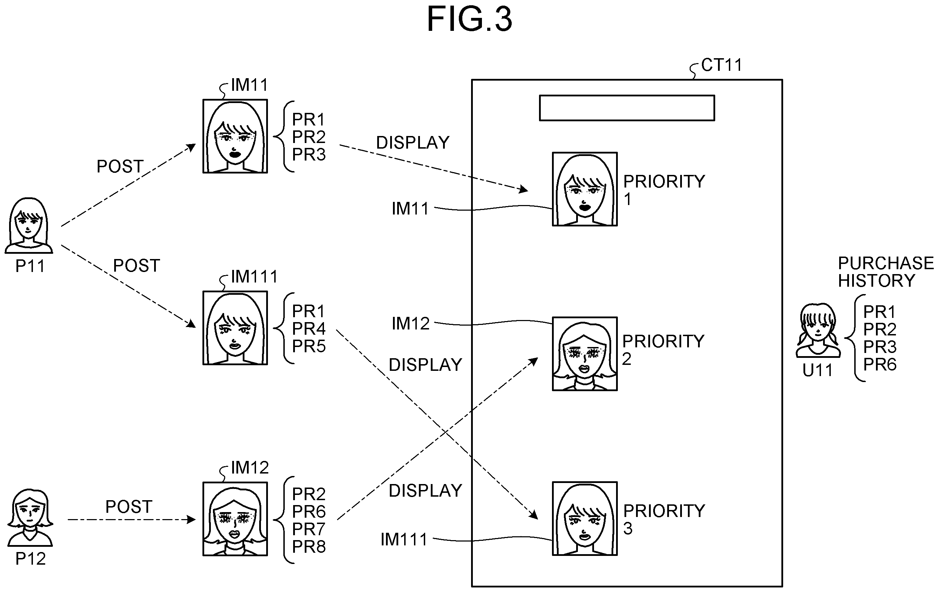

FIG. 3 is an explanatory diagram for explaining information processing for increasing the priority of the face image as the face image is the same as or more similar to the cosmetic products owned by the user U11, based on the purchase history of cosmetic products of the user U11. The face image IM11 and the face image IM12 are face images that are posted by the poster P11, and the face image IM12 is a face image that is posted by the poster P12. Furthermore, cosmetic products that are used for makeup in the face image IM11 are the cosmetic product PR1, the cosmetic product PR2, and the cosmetic product PR3, cosmetic products that are used for makeup in the face image IM111 are the cosmetic product PR1, a cosmetic product PR4, a cosmetic product PR5, and cosmetic products that are used for makeup in the face image IM12 are the cosmetic product PR2, a cosmetic product PR6, a cosmetic product PR7, and a cosmetic product PR8. When the purchase history of the user U11 includes the cosmetic product PR1, the cosmetic product PR2, the cosmetic product PR3, and the cosmetic product PR6, the priority of the face image IM11 that uses the cosmetic product PR1, the cosmetic product PR2, and the cosmetic product PR3 in common is the highest, the priority of the face image IM111 that uses the cosmetic product PR2 and the cosmetic product PR6 in common is the middle, and the priority of the face image IM12 that uses the cosmetic product PR1 in common is the lowest.

### Eighth variation: acquisition of color information

In the embodiment as described above, the skin color, such as a face color, may be measured by, for example, a measurement item, such as ZOZOGLASS (registered trademark), that can perform measurement by being worn on the user U11. By accurately measuring the skin color with light correction, it is possible to increase accuracy of the makeup information that is generated by the information processing apparatus 100.

### 3. Configuration of user terminal

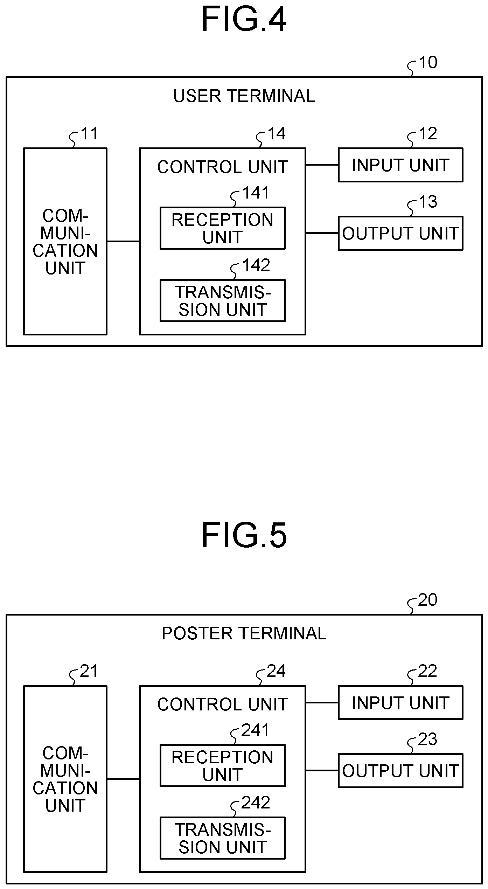

A configuration of the user terminal 10 according to one embodiment will be described below with reference to FIG. 4. FIG. 4 is a diagram illustrating a configuration example of the user terminal 10 according to one embodiment. As illustrated in FIG. 4, the user terminal 10 includes a communication unit 11, an input unit 12, an output unit 13, and a control unit 14.

### Communication unit 11

The communication unit 11 is implemented by, for example, a Network Interface Card (NIC) or the like. Further, the communication unit 11 is connected to the predetermined network N in a wired or wireless manner, and transmits and acquires information to and from the information processing apparatus 100 or the like via the predetermined network N.

### Input unit 12

The input unit 12 receives various kinds of operation from a user. In FIG. 2, various kinds of operation are received from the user U11. For example, the input unit 12 may receive various kinds of operation from the user via a display screen using a touch panel function. Further, the input unit 12 may receive various kinds of operation from a button that is arranged on the user terminal 10 or a keyboard or a mouse that is connected to the user terminal 10.

### Output unit 13

The output unit 13 is a display screen, such as a tablet terminal, that is implemented by, for example, a liquid crystal display or an organic Electro-Luminescence (EL) display, and is a display device for displaying various kinds of information. For example, the output unit 13 displays information that is transmitted from the information processing apparatus 100.

### Control unit 14

The control unit 14 is, for example, a controller, and is implemented by causing a Central Processing Unit (CPU), a Micro Processing Unit (MPU), or the like to execute various kinds of programs that are stored in a storage device in the user terminal 10 by using a Random Access Memory (RAM) as a work area. For example, the various kinds of programs include a program of an application that is installed in the user terminal 10. For example, the various kinds of programs include a program of an application that displays a content including a face image that is transmitted from the information processing apparatus 100. Furthermore, the control unit 14 is implemented by, for example, an integrated circuit, such as an Application Specific Integrated Circuit (ASIC) or a Field Programmable Gate Array (FPGA).

As illustrated in FIG. 4, the control unit 14 includes a reception unit 141 and a transmission unit 142, and implements or executes information processing as described below.

### Reception unit 141

The reception unit 141 receives various kinds of information from a different information processing apparatus, such as the information processing apparatus 100. For example, the reception unit 141 receives information for displaying a content that includes the face image of the user with the same makeup as the makeup of the poster that is used in the face image selected by the user and a description content of the cosmetic product that is used for the makeup.

### Transmission unit 142

The transmission unit 142 transmits various kinds of information to a different information processing apparatus, such as the information processing apparatus 100. For example, the transmission unit 142 transmits information on a face image that is selected by the user to check whether the makeup of the poster suits the user.

### 4. Configuration of poster terminal

A configuration of the poster terminal 20 according to one embodiment will be described below with reference to FIG. 5. FIG. 5 is a diagram illustrating a configuration example of the poster terminal 20 according to one embodiment. As illustrated in FIG. 5, the poster terminal 20 includes a communication unit 21, an input unit 22, an output unit 23, and a control unit 24.

### Communication unit 21

The communication unit 21 is implemented by, for example, a NIC or the like. Further, the communication unit 21 is connected to the predetermined network N in a wired or wireless manner, and transmits and acquires information to and from the information processing apparatus 100 or the like via the predetermined network N.

### Input unit 22

The input unit 22 receives various kinds of operation from a poster. In FIG. 2, various kinds of operation from the poster P11 and the poster P12 are received. For example, the input unit 22 may receive various kinds of operation from a poster via a display screen of a touch panel function. Further, the input unit 22 may receive various kinds of operation from a button that is arranged on the poster terminal 20 or a keyboard or a mouse that is connected to the poster terminal 20.

### Output unit 23

The output unit 23 is a display screen, such as a tablet terminal, that is implemented by, for example, a liquid crystal display or an organic EL display, and is a display device for displaying various kinds of information. For example, the output unit 23 displays information that is transmitted from the information processing apparatus 100.

### Control unit 24

The control unit 24 is, for example, a controller, and is implemented by causing a CPU, an MPU, or the like to execute various kinds of programs that are stored in a storage device in the poster terminal 20 by using a RAM as a work area. For example, the various kinds of programs include a program of an application that is installed in the poster terminal 20. For example, the various kinds of programs include a program of an application that transmits a face image of a poster in accordance with operation performed by the poster. Furthermore, the control unit 14 is implemented by, for example, an integrated circuit, such as an ASIC or an FPGA.

As illustrated in FIG. 5, the control unit 24 includes a reception unit 241 and a transmission unit 242, and implements or executes information processing as described below.

### Reception unit 241

The reception unit 241 receives various kinds of information from a different information processing apparatus, such as the information processing apparatus 100. For example, when a user who has applied makeup to the face image of the user by viewing the face image that is provided by the poster purchases a cosmetic product corresponding to the applied makeup in a predetermined electronic mall, the reception unit 241 receives information on a reward that is determined in accordance with the purchase made by the user and that the poster can receive. Meanwhile, the reception unit 241 may receive information that allows the poster to receive the reward corresponding to the purchase made by the user.

### Transmission unit 242

The transmission unit 242 transmits various kinds of information to a different information processing apparatus, such as the information processing apparatus 100. For example, the transmission unit 142 transmits the face image of the poster in accordance with operation that is performed by the poster.

### 5. Configuration of information processing apparatus

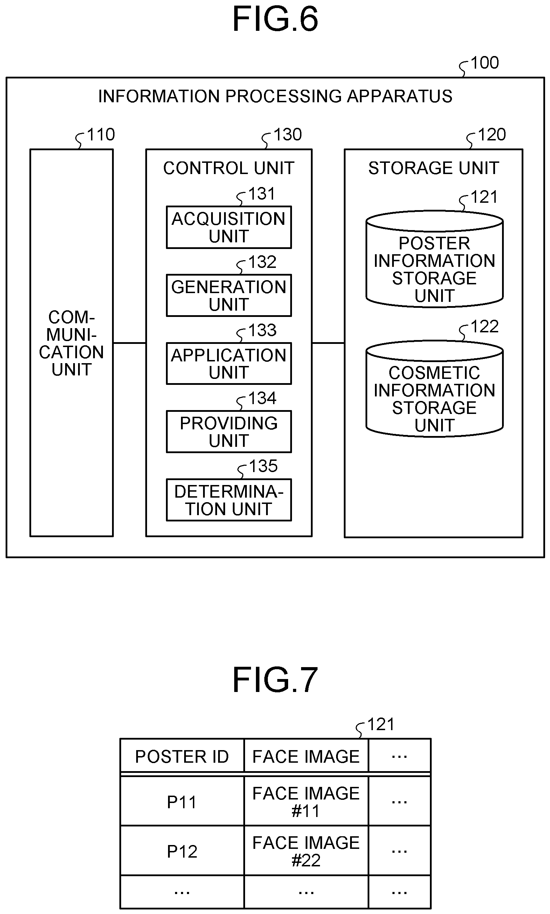

A configuration of the information processing apparatus 100 according to one embodiment will be described below with reference to FIG. 6. FIG. 6 is a diagram illustrating a configuration example of the information processing apparatus 100 according to one embodiment. As illustrated in FIG. 6, the information processing apparatus 100 includes a communication unit 110, a storage unit 120, and a control unit 130. Meanwhile, the information processing apparatus 100 may include an input unit (for example, a keyboard, a mouse, or the like) that receives various kinds of operation from an administrator of the information processing apparatus 100, and a display unit (for example, a liquid crystal display or the like) for displaying various kinds of information.

### Communication unit 110

The communication unit 110 is implemented by, for example, a NIC or the like. Further, the communication unit 110 is connected to the network N in a wired or wireless manner, and transmits and acquires information to and from the user terminal 10 or the like via the network **N.**

### Storage unit 120

The storage unit 120 is implemented by, for example, a semiconductor memory device, such as a RAM or a flash memory, or a storage device, such as a hard disk or an optical disk. As illustrated in FIG. 6, the storage unit 120 includes a poster information storage unit 121 and a cosmetic information storage unit 122.

The poster information storage unit 121 stores therein a face image of a poster. FIG. 7 illustrates an example of the poster information storage unit 121 according to one embodiment. As illustrated in FIG. 7, the poster information storage unit 121 includes items, such as a "poster ID" and a "face image".

The "poster ID" indicates identification information for identifying a poster. The "face image" indicates a face image of an unpainted face of the poster that the poster has registered at the first time use. In the example illustrated in FIG. 7, the example is illustrated in which conceptual information, such as a "face image #11" or a "face image #12", is stored in the "face image"; however, in reality, image data or the like is stored. Furthermore, in the "face image", for example, a URL at which the image data is present, a file path name that indicates a storage location, or the like may be stored.

Specifically, FIG. 7 illustrates an example in which the face image of the unpainted face of the poster who is identified by the poster ID of "P11" is the "face image #11".

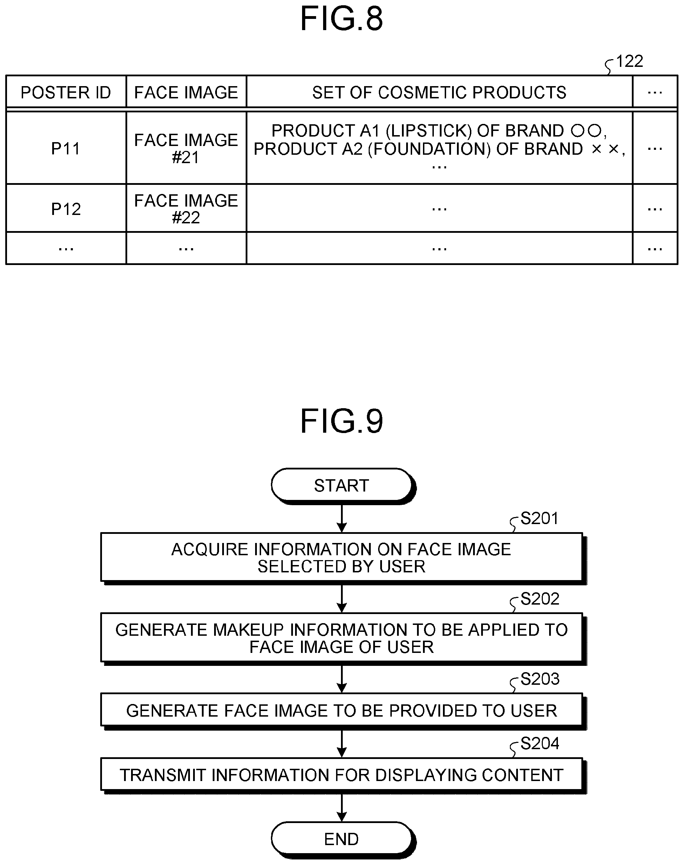

The cosmetic information storage unit 122 stores therein information on a cosmetic product that is used for makeup by the poster. As illustrated in FIG. 8, the cosmetic information storage unit 122 includes items, such as a "poster ID", a "face image", and a "set of cosmetic products".

The "poster ID" indicates identification information for identifying a poster. The "face image" indicates a face image that is posted by the poster. In the example illustrated in FIG. 8, the example is illustrated in which conceptual information, such as a "face image #21" or a "face image #22", is stored in the "face image"; however, in reality, image data or the like is stored. Furthermore, in the "face image", for example, a URL at which the image data is present, a file path name that indicates a storage location, or the like may be stored. The "set of cosmetic products" indicates a set of cosmetic products that are used for the makeup by the poster.

Specifically, FIG. 8 illustrates an example in which the face image that is posted by the poster who is identified by the poster ID of "P11" is the "face image #21" and the set of cosmetic products that are used for the makeup by the poster is "product A1 (lipstick) of brand oo, product A2 (foundation) of brand ××, ...". Meanwhile, descriptions in brackets indicate categories of the cosmetic products.

### Control unit 130

The control unit 130 is, for example, a controller, and is implemented by causing a CPU, an MPU, or the like to execute various kinds of programs that are stored in a storage device in the information processing apparatus 100 by using a RAM as a work area. Furthermore, the control unit 130 is a controller and is implemented by, for example, an integrated circuit, such as an ASIC or an FPGA.

As illustrated in FIG. 6, the control unit 130 includes an acquisition unit 131, a generation unit 132, an application unit 133, a providing unit 134, and a determination unit 135, and implements or executes information processing as described below. Meanwhile, an internal configuration of the control unit 130 is not limited to the configuration illustrated in FIG. 6, but it may be possible to adopt a different configuration as long as it is possible to perform the information processing (to be described later).

### Acquisition unit 131

The acquisition unit 131 acquires various kinds of information from an external information processing apparatus. The acquisition unit 131 acquires various kinds of information from a different information processing apparatus, such as the user terminal 10.

The acquisition unit 131 acquires various kinds of information from the storage unit 120. Further, the acquisition unit 131 stores various kinds of acquired information in the storage unit 120.

The acquisition unit 131 acquires information on a face image that the user has selected from among face images that are posted by posters on a predetermined service.

The acquisition unit 131 acquires information on a cosmetic product that is used for makeup by the poster in relation to the face image that is selected by the user.

### Generation unit 132

The generation unit 132 generates makeup information for generating a face image in which the same makeup as makeup that a poster has used in the face image selected by the user is applied to a face image, by using a certain method, such as PSGAN, based on the information that is acquired by the acquisition unit 131. Further, when an order of makeup application of the makeup that is applied by the poster is identified in relation to the face image that is selected by the user, the generation unit 132 may generate the makeup information in which the order of makeup application is reflected.

The generation unit 132 generates information for displaying a content that includes the face image to which the makeup information is applied by the application unit 133 (to be described later) and a description content of the cosmetic product that is identified based on the information that is acquired by the acquisition unit 131.

### Application unit 133

The application unit 133 applies the makeup information that is generated by the generation unit 132 to a face image of the user that is selected as an application target, and generates a face image that is to be displayed on the user terminal 10.

The application unit 133 applies the makeup information that is generated from a face image that is selected from among face images that are preferentially selected or displayed in descending order of priorities based on priorities that are determined based on the face information, the body information, the purchase history of cosmetic products, or the like of the user, and generates the face image that is to be displayed on the user terminal 10.

The application unit 133 applies the makeup information that is generated from a face image that is selected from among face images that are preferentially selected or displayed in descending order of priorities based on priorities that are determined based on indices, such as access histories, purchase histories, or evaluation histories with respect to the face images, that represent popularities of the face images, and generates the face image that is to be displayed on the user terminal 10.

The application unit 133 applies the makeup information that is generated from a face image that is selected from among face images that are preferentially selected or displayed in descending order of priorities based on priorities that are determined based on total prices of cosmetic products that are used for makeup by posters, and generates the face image that is to be displayed on the user terminal 10.

### Providing unit 134

The providing unit 134 transmits the information that is generated by the generation unit 132 and that is used for displaying a content to the user terminal 10. The user terminal 10, upon receiving the information that is transmitted by the providing unit 134, displays the content that corresponds to the information that is generated by the generation unit 132.

### Determination unit 135

The determination unit 135 determines whether or not the user has purchased a cosmetic product that is associated with the content that is provided by the providing unit 134, and when determining that the user has purchased the cosmetic product, determines that a reward corresponding to the purchase made by the user it to be given to the poster who has posted the face image selected by the user. Further, the providing unit 134 performs a process of giving the reward corresponding to the purchase made by the user to the poster. Furthermore, the determination unit 135 may determine that information for allowing the poster to receive the reward corresponding to the purchase made by the user is to be transmitted. In this case, the providing unit 134 transmits the information for allowing the poster to receive the reward corresponding to the purchase made by the user. Moreover, the determination unit 135 may determine that the reward is to be transferred to an account of the poster. In this case, the providing unit 134 performs a process of transferring the reward to the account of the poster.

### 6. Flow of information processing

The flow of information processing performed by the information processing system 1 according to one embodiment will be described below with reference to FIG. 9. FIG. 9 is a flowchart illustrating the flow of the information processing performed by the information processing system 1 according to one embodiment.

As illustrated in FIG. 9, the information processing apparatus 100 acquires information on a face image that is selected by the user from among face images that are posted by posters on a predetermined service (Step S201).

The information processing apparatus 100 generates makeup information for generating a face image in which the same makeup as makeup that a poster has used in the face image selected by the user is applied to a face image, based on the acquired information (Step S202).

The information processing apparatus 100 generates a face image that is to be provided to the user by applying the generated makeup information to a face image of the user that is selected as an application target (Step S203).

The information processing apparatus 100 transmits information for displaying a content that includes the generated face image and a description content of a cosmetic product that is used for the makeup by the poster (Step S204).

### 7. Modification

The information processing system 1 according to one embodiment as described above may be embodied in various different modes other than the embodiment as described above. Therefore, other embodiments of the information processing system 1 will be described below.

In the embodiment as described above, the case has been described in which the user terminal 10 displays the face image of the user to which the makeup information is applied, but embodiments are not limited to this example. For example, the face image may be displayed on a terminal device of a different person who performs online communication with the user. For example, when a user selects a face image of a poster in order that the user participates in an online meeting, it may be possible to apply, in a pseudo manner, makeup related to the selected face image to the face of the user who participates in the online meeting, and display a face image to which the makeup related to the face image selected by the user is applied on the terminal device of the different person. Further, when the user participates in the meeting by using the makeup of the poster, it may be possible to charge the user with fees in accordance with use conditions, such as a use time or a use frequency. Furthermore, it may be possible to perform a process of giving, to the poster, a part of the fees charged to the user as a reward. With this configuration, the face with the makeup is displayed online for the different person, so that the user is able to participate in the meeting without makeup.

In this case, the application unit 133 applies, in real time, the makeup information that is generated by the generation unit 132 to the face image of the user being captured, and generates, in real time, the face image to be displayed on the terminal device of a different person. The generation unit 132 generates, in real time, information for displaying, on the terminal device of the different person, a face image by applying the makeup information to the face image of the user by using the face image that is generated by the application unit 133. The providing unit 134 transmits the information that is generated by the generation unit 132, and distributes the face image to which the makeup information is applied by the application unit 133 to the different person who performs online communication with the user in real time. The determination unit 135 determines a reward that is to be given to the poster who has posted the face image selected by the user, in accordance with online usage (for example, a use time or a use frequency) of the face image that is generated by the application unit 133. In other words, the determination unit 135 determines the reward that is to be given to the poster who has posted the face image based on which the makeup information is generated, in accordance with usage of the face image that is obtained by applying the makeup information to the face image of the user. Meanwhile, the application may be performed in cloud, and, in this case, the providing unit 134 may provide, for example, only a right to use the makeup information. Further, the user uses the provided right to use and displays the face image that is obtained by applying the makeup information to the face image of the user onto the terminal device of the different person.

### 8. Effects

As described above, the information processing apparatus 100 according to one embodiment includes the generation unit 132, the application unit 133, and the providing unit 134. The generation unit 132 generates makeup information for generating a face image in which the same makeup as predetermined makeup is applied to a face image based on a face image of a poster with the predetermined makeup. The application unit 133 applies, to a face image of a user, makeup information that is generated from a face image that is selected by the user from among face images that are posted by posters who meet a predetermined condition. The providing unit 134 provides, to the user, a content that indicates the face image to which the makeup information is applied by the application unit 133 and a description content of a product that is used for the makeup.

With this configuration, the information processing apparatus 100 according to one embodiment is able to appropriately respond a request to check whether or not makeup of a different person suits a user.

Furthermore, the content is a content that includes information that allows, by operation of the user, the user to access to a predetermined electronic mall in which a product is available for purchase.

With this configuration, the information processing apparatus 100 according to one embodiment is able to appropriately send a customer to a predetermined electronic mall in which a product that a different person has used for the makeup is available for purchase.

Moreover, the information processing apparatus 100 according to one embodiment further includes the determination unit 135 that, when the user purchases the product in the predetermined electronic mall, determines that a reward corresponding to the purchase made by the user it to be given to a poster who has posted the face image selected by the user.

With this configuration, the information processing apparatus 100 according to one embodiment is able to appropriately motivate the poster to post a face image.

Furthermore, the application unit 133 applies the makeup information that is generated from a face image that is selected from among face images that are preferentially selected or displayed based on a predetermined criterion.

With this configuration, the information processing apparatus 100 according to one embodiment is able to provide appropriate information to the user based on the predetermined criterion, so that it is possible to more appropriately respond a request of the user.

Moreover, the application unit 133 applies the makeup information that is generated from a face image that is selected from among face images that are preferentially selected or displayed in descending order of priorities, based on priorities that are determined based on at least one of face information, body information, and a product purchase history of the user.

With this configuration, the information processing apparatus 100 according to one embodiment is able to provide appropriate information to the user based on the face information, the body information, the product purchase history, or the like, so that it is possible to more appropriately respond to a request of the user.

Furthermore, the application unit 133 applies the makeup information that is generated from a face image that is selected from among face images that are preferentially selected or displayed in descending order of priorities, based on priorities that are determined based on at least one of an access history, a purchase history, and an evaluation history of the face image.

With this configuration, the information processing apparatus 100 according to one embodiment is able to provide appropriate information to the user based on the access history, the purchase history, the evaluation history, or the like of the face image, so that it is possible to more appropriately respond to a request of the user.

Moreover, the application unit 133 applies the makeup information that is generated from a face image that is selected from among face images that are preferentially selected or displayed in descending order of priorities, based on priorities that are determined based on a total price of products.

With this configuration, the information processing apparatus 100 according to one embodiment is able to provide appropriate information to the user based on a total price of products, so that it is possible to more appropriately respond to a request of the user.

### 9. Hardware configuration

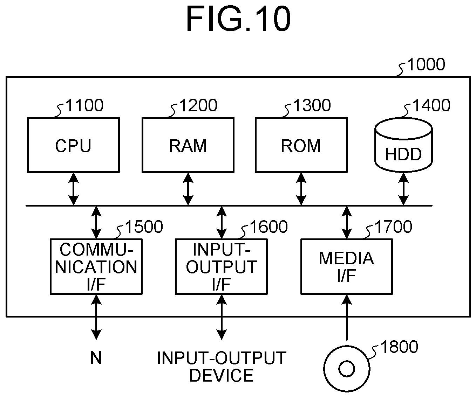

The user terminal 10, the poster terminal 20, and the information processing apparatus 100 according to one embodiment as described above are implemented by, for example, a computer 1000 that is configured as illustrated in FIG. 10. FIG. 10 is a hardware configuration diagram illustrating an example of a computer that implements the functions of the user terminal 10, the poster terminal 20, and the information processing apparatus 100. The computer 1000 includes a CPU 1100, a RAM 1200, a ROM 1300, an HDD 1400, a communication interface (I/F) 1500, an input-output interface (I/F) 1600, and a medial interface (I/F) 1700.

The CPU 1100 operates based on a program that is stored in the ROM 1300 or the HDD 1400, and controls each of the units. The ROM 1300 stores therein a boot program that is executed by the CPU 1100 at the time of activation of the computer 1000, a program that is dependent on hardware of the computer 1000, or the like.

The HDD 1400 stores therein a program that is executed by the CPU 1100, data that is used by the program, or the like. The communication interface 1500 acquires data from a different apparatus via a predetermined communication network, sends the data to the CPU 1100, and transmits data that is generated by the CPU 1100 to a different apparatus via the predetermined communication network.

The CPU 1100 controls an output device, such as a display or a printer, and an input device, such as a keyboard or a mouse, via the input-output interface 1600. The CPU 1100 acquires data from the input device via the input-output interface 1600. Furthermore, the CPU 1100 outputs generated data to the output device via the input-output interface 1600.

The media interface 1700 reads a program or data that is stored in a recording medium 1800, and provides the program or the data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium, such as a Digital Versatile Disc (DVD) or a Phase change rewritable Disk (PD), a magneto-optical recording device, such as a Magneto-Optical disk (MO), a tape medium, a magnetic recording medium, a semiconductor memory, or the like.

For example, when the computer 1000 functions as the user terminal 10, the poster terminal 20, and the information processing apparatus 100 according to one embodiment, the CPU 1100 of the computer 1000 executes the program that is loaded on the RAM 1200 and implements the functions of the control units 14, 24, and 130. The CPU 1100 of the computer 1000 reads the program from the recording medium 1800 and executes the program; however, as another example, it may be possible to acquire the program from a different device via the predetermined communication network.

### 10. Others

Of the processes described in the embodiments, all or part of a process described as being performed automatically may also be performed manually. Alternatively, all or part of a process described as being performed manually may also be performed automatically by known methods. In addition, the processing procedures, specific names, and information including various kinds of data and parameters illustrated in the above-described document and drawings may be arbitrarily changed unless otherwise specified. For example, various kinds of information illustrated in each of the drawings are not limited to the information as illustrated in the drawings.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings, and all or part of the apparatuses may be functionally or physically distributed or integrated in arbitrary units depending on various loads or use conditions.

Moreover, the embodiments as described above may be combined appropriately as long as processing contents do not conflict with one another.

While the embodiments of the present disclosure have been explained in detail above based on the drawings, the embodiments are described by way of example, and the present invention may be embodied in various other forms with various changes or modifications based on knowledge of a person skilled in the art, in addition to the embodiments described in this specification.

Furthermore, the "unit (section, module, unit)" described above may be replaced with a "means", a "circuit", or the like. For example, the acquisition unit may be replaced with an acquisition means or an acquisition circuit.

### Reference Signs List

- 1: information processing system
- 10: user terminal
- 11: communication unit
- 12: input unit
- 13: output unit
- 14: control unit
- 20: poster terminal
- 21: communication unit
- 22: input unit
- 23: output unit
- 24: control unit
- 100: information processing apparatus
- 110: communication unit
- 120: storage unit
- 121: poster information storage unit
- 122: cosmetic information storage unit
- 130: control unit
- 131: acquisition unit
- 132: generation unit
- 133: application unit
- 134: providing unit
- 135: determination unit
- 141: reception unit
- 142: transmission unit
- 241: reception unit
- 242: transmission unit
- N: network

## Claims

1. An information processing apparatus including:
a generation unit that generates makeup information for generating a face image in which same makeup as predetermined makeup is applied to a face image based on a face image of a poster with the predetermined makeup;
an application unit that applies, to a face image of a user, makeup information that is generated from a face image that is selected by the user from among face images that are posted by posters who meet a predetermined condition; and
providing unit that provides, to the user, a content that indicates the face image to which the makeup information is applied by the application unit and a description content of a product that is used for the makeup.

2. The information processing apparatus according to claim 1, wherein the content is a content that includes information that allows, by operation of the user, the user to access to a predetermined electronic mall in which a product is available for purchase.

3. The information processing apparatus according to claim 2, further including:
a determination unit that, when the user purchases the product in the predetermined electronic mall, determines that a reward corresponding to the purchase made by the user it to be given to a poster who has posted the face image selected by the user.

4. The information processing apparatus according to any one of claims 1 to 3, wherein the application unit applies the makeup information that is generated from a face image that is selected from among face images that are preferentially selected or displayed based on a predetermined criterion.

5. The information processing apparatus according to claim 4, wherein the application unit applies the makeup information that is generated from a face image that is selected from among face images that are preferentially selected or displayed in descending order of priorities, based on priorities that are determined based on at least one of face information, body information, and a product purchase history of the user.

6. The information processing apparatus according to claim 4, wherein the application unit applies the makeup information that is generated from a face image that is selected from among face images that are preferentially selected or displayed in descending order of priorities, based on priorities that are determined based on at least one of an access history, a purchase history, and an evaluation history of the face image.

7. The information processing apparatus according to claim 4, wherein the application unit applies the makeup information that is generated from a face image that is selected from among face images that are preferentially selected or displayed in descending order of priorities, based on priorities that are determined based on a total price of products.

8. An information processing method implemented by a computer including:
a generation process of generating makeup information for generating a face image in which same makeup as predetermined makeup is applied to a face image based on a face image of a poster with the predetermined makeup;
an application process of applying, to a face image of a user, makeup information that is generated from a face image that is selected by the user from among face images that are posted by posters who meet a predetermined condition; and
a providing process of providing, to the user, a content that indicates the face image to which the makeup information is applied at the application process and a description content of a product that is used for the makeup.

9. An information processing program that causes the computer to execute a process including:
a generation step of generating makeup information for generating a face image in which same makeup as predetermined makeup is applied to a face image based on a face image of a poster with the predetermined makeup;
an application step of applying, to a face image of a user, makeup information that is generated from a face image that is selected by the user from among face images that are posted by posters who meet a predetermined condition; and
a providing step of providing, to the user, a content that indicates the face image to which the makeup information is applied at the application process and a description content of a product that is used for the makeup.
